# EUROPEAN PATENT APPLICATION

(11) **EP 2 320 311 A1**
(43) Date of publication of application: **11.05.2011**
(21) Application number: 09808176.3
(22) Date of filing: 05.08.2009
(51) Int. Cl.: G06F 3/048, G06F 3/041, G06F 3/14, G09G 5/00

(54) **IMAGE DISPLAY DEVICE**

(30) Priority: 21.08.2008 JP 2008212637
(71) Applicant: Konica Minolta Holdings, Inc., Tokyo 100-0005 (JP)
(72) Inventor: IKEDA Yusuke, Hino-shi Tokyo 191-8511 (JP); NAGANO Masakazu, Hino-shi Tokyo 191-8511 (JP); TAKIMURA Ryo, Hino-shi Tokyo 191-8511 (JP); IRITANI Yu, Hino-shi Tokyo 191-8511 (JP)
(74) Representative: Gille Hrabal Struck Neidlein Prop Roos
(86) International application number: PCT/JP2009/063850
(87) International publication number: WO 2010/021240

(57) **Abstract**

Objects (D1, D2) as meeting materials are displayed on a display (105) of a table-shaped image display device (A). In the event of a competition over an object by multiple participants, for example, when meeting participants (P1, P2) discuss over a common object (D2), the competition is detected automatically, and the object is enlarged and displayed so that the participants of the discussion can easily see.

## Description

### FIELD OF THE INVENTION

The present invention relates to an image display device (an electronic board or the like) used, for example, for discussion among a plurality of participants.

### BACKGROUND OF THE INVENTION

One of the proposals made so far in the conventional art includes an image display device (an electronic board or the like) used for discussion among a plurality of participants wherein photos and discussion materials are displayed. This image display device includes a table type image display device, wherein discussion is held among a plurality of participants surrounding a table type image display device, observing discussion materials displayed on the image display device.

The art disclosed in the Patent Literature 1 or 2 has been available for an image display device. In the art disclosed in the Patent Literature 1 or 2, discussion is held among a plurality of participants sitting around a table type image display device and observing the materials displayed on the common area of the image display device. If discussion can be held by observing the materials displayed on the image display device, there will be no need of preparing discussion materials in the form of paper for participants by printing out. This will enhance user convenience.

### EARLIER TECHNOGICAL LITERATURE

### EARLIER LITERATURE

Patent Literature 1: Japanese Unexamined Patent Application Publication No. 2000-47786
Patent Literature 2: Japanese Unexamined Patent Application Publication No. 2000-47788

### SUMMARY OF THE INVENTION

### OBJECT OF THE INVENTION

Incidentally, when discussion is held among the participants sitting around the image display device using a material (object) appearing on the table type image display device, the material is easy to observe or difficult to observe, depending on the place occupied by a participant. For example, the displayed material is clearly visible to the participant sitting closer to the material, and is less clearly visible to the participant sitting farther away from the material. Especially when the image display device is designed in a large-sized configuration, participants are separated from one another and displayed materials appear small, then there will be a great difference in the visibility of the material, depending on the place occupied by a participant. In this case, if the displayed position of the material has been moved closer to the person sitting farther away, the material will be difficult to see for the participant who has been sitting closer so far.

In view of the problems described above, it is an object of the present invention to provide an image display device that ensures easy viewing by a plurality of participants when discussion is held among a plurality of participants sitting around the image display device using a material (object) appearing on a display

### MEANS FOR SOLVING THE PROBLEMS

To achieve the aforementioned object, the image display device of the present invention includes:
a display section for displaying an object;
a detecting section for detecting a conflict among a plurality of users regarding the object appearing on the display section; and
a processing unit for enlarging a conflicting object when a conflict has been detected by the aforementioned detecting section.

To achieve the aforementioned object, the image display device of the present invention includes:
a display section for displaying an object;
a detecting section for detecting a conflict among a plurality of users regarding the object appearing on the display section; and
a processing unit for moving a conflicting object to a common display area of the display section and adjusting the position of displaying the object having been moved to the common display area, when a conflict has been detected by the aforementioned detecting section.

### EFFECTS OF THE INVENTION

The image display device of the present invention ensures easy viewing for a plurality of participants when discussion is held among a plurality of participants surrounding a table type image display device, using one material (object) displayed on the image display device.

### BRIEF DESCRIPTION OF THE DRAWINGS

Fig. 1 is a schematic diagram representing an image display device of the present invention;
Fig. 2 is a block diagram representing an image display device of the present invention;
Fig. 3 is a flow chart representing the operation of enlarging an object and the operations related to the enlarging operation;
Fig. 4 is a schematic diagram showing the image display device of Fig. 1 as viewed from the top;
Fig. 5 is a schematic diagram showing the image display device of Fig. 1 as viewed from the top;
Fig. 6 is a flow chart representing the operation of displaying a conflicting object in the common display area of the display;
Fig. 7 is a schematic diagram showing the image display device of Fig. 1 as viewed from the top;
Fig. 8 is a schematic diagram showing the image display device of Fig. 1 as viewed from the top;
Fig. 9 is a schematic diagram showing the image display device of another configuration as viewed from the top;
Fig. 10 is a schematic diagram showing the image display device of another configuration as viewed from the top; and
Fig. 11 is an explanatory diagram showing how a conflicting object is marked.

### DESCRIPTION OF THE PREFERRED EMBODIMENT

### [Overview of image display device]

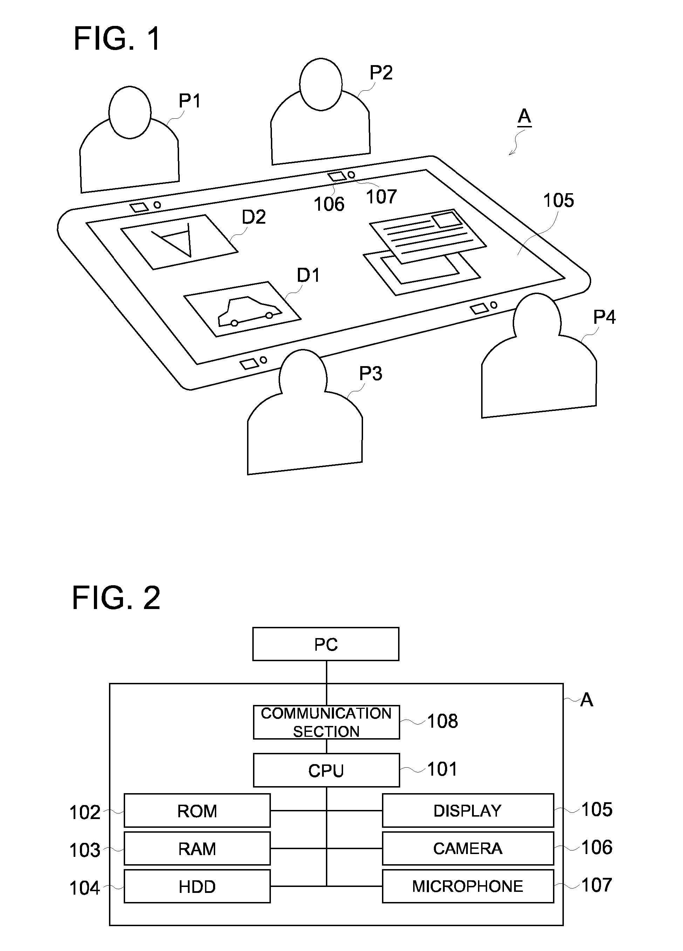

Fig. 1 is a schematic diagram representing an image display device of the present invention.

The image display device A of Fig. 1 is a table type device, wherein a display 105 extends in the horizontal direction. A plurality of participants P 1 through P4 sit around the image display device A and have a discussion by watching objects D1 and D2 as materials appearing on the display 105.

The object D1 appearing on the display 105 is a photographic image, and the object D2 is a document image. Various forms of other objects can be shown on the display 105. The information of the object is stored in the HDD (Hard Disc Drive) 104 of the image display device A to be described later. The storage medium storing the object information is connected to the image display device A and can be shown on the display 105.

The display 105 is designed in a touch panel configuration. The objects D1 and D2 appearing on the display 105 can be touched by the participants P1 through P4 to change the display position of the objects D1 and D2. If the participants P1 through P4 touch the display 105 to describe a letter, the letter can be shown on the display 105.

A camera 106 and microphone 107 are separately installed where participants P 1 through P4 are sitting. The participants P1 through P4 are photographed by the camera 106, and the voices of the participants P1 through P4 are picked up by the microphone 107.

The image display device A of Fig. 1 is used independently when four participants P 1 through P4 have a discussion. The image display device A can be linked with another image display device located at a remote place via the network. In this case, one and the same object is shown on the respective displays, and the image captured by the camera 106 and the voice picked up by the microphone 107 in one of these image display devices are transmitted to the other image display device, so that participants located at different places can have a discussion.

Fig. 2 is a block diagram representing an image display device of the present invention. It shows a typical structure.

As shown in Fig. 2, the image display device A is linked to a personal computer through a communication section 108. The data sent from the personal computer can be stored in the HDD 104, and can be displayed as an object on the display 105.

The image display device A includes a CPU (Central Processing Unit) 101, ROM (Read Only Memory) 102, RAM (Random Access Memory) 103, and others. The CPU 101 controls the operation of the entire image display device, and is connected with the ROM 102 and RAM 103. The CPU 101 reads out various forms of program stored in the ROM 102, expands them on the RAM 103, and controls operations of various sections. Further, the CPU 101 implements various forms of processing according to the program expanded on the RAM 103. The result of processing is stored in the RAM 103. The result of processing stored in the RAM 103 is stored in a prescribed storage site. In this embodiment, the CPU 101 constitutes a detecting section and adjusting section through collaboration with the ROM 102 and RAM 103.

The ROM 102 stores programs and data in advance, and is made of a semiconductor memory. The RAM 103 provides a work area for temporarily storing the data processed by various forms of program executed by the CPU 101. The HDD 104 has a function of storing the information on the object shown on the display 105. The HDD 104 is made of lamination of metallic disks formed by application or vapor deposition of a magnetic substance. This is rotated at a high speed by a motor and is brought close to the magnetic head, whereby data is read. The operations of the display 105, camera 106 and microphone 107 are controlled by the CPU 101.

### [Enlarging a conflicting object]

When the participants P1 through P4 have a discussion using the objects D1 and D2 on the display 105 of the table type image display device A of Fig. 1, objects D 1 and D2 are easy to see or difficult to see, depending on the position of each of the participants P1 through P4. For example, when the participants P1 and P4 have a discussion using the object D2 of Fig. 1, the participant P 1 is closer to the object D2, which is therefore easy to view, whereas the participant P4 is farther from the object D2, which is therefore difficult to watch.

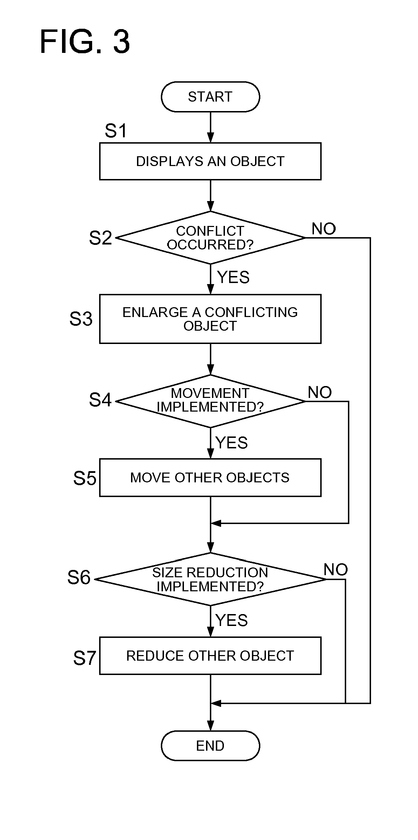

Thus, means are provided to ensure that, when a plurality of participants have a discussion watching one and the same object, and a conflict occurs among a plurality of participants, this object is displayed in an enlarged configuration so that a plurality of participants can easily view the object.
(The term "Conflict" in the sense in which it is used in the present invention is applied to the case wherein, when a plurality of participants have a discussion using one and the same object, attention of a plurality of participants is paid to on one and the same object). Referring to Figs. 3 through 5, the following describes the details of enlarging an object on the display 105.

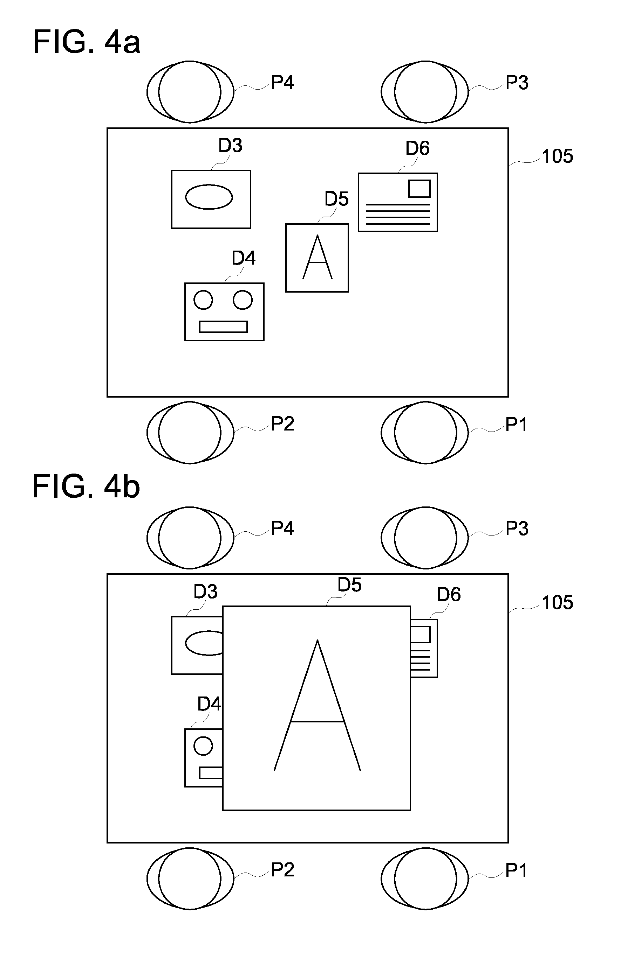

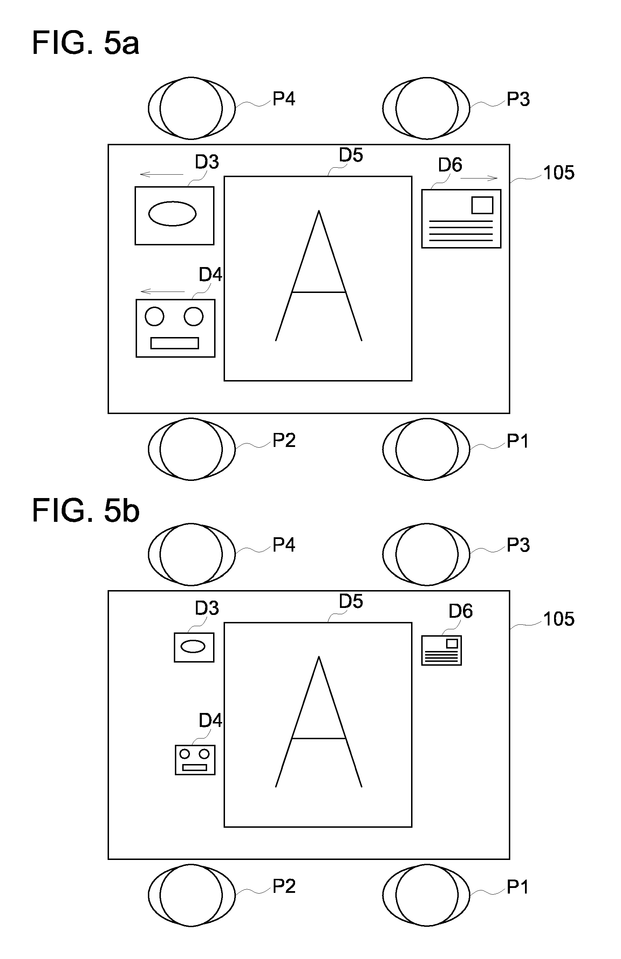

Fig. 3 is a flow chart representing the operation of enlarging an object and the operations related to the enlarging operation. The decision step (Steps S2, S4 and S6) of Fig. 3 is implemented by collaboration of the CPU 101 of the image display device A with the ROM 102 and RAM 103. Figs. 4a, 4b, 5a and 5b are schematic diagrams showing the image display device of Fig. 1 as viewed from the top. Four objects D3 through D6 are assumed to be displayed on the display 105 of the image display device A.

In the first place, objects (D3 through D6 in Figs. 4 and 5) are shown on the display 105 of the image display device A (Step S 1). The information of the displayed object is stored, for example, in the HDD 104. The participants P1 through P4 selects the object to be shown on the display 105, and the selected object is then displayed.

When the object has appeared on the display 105, the participants P1 through P4 starts discussion, using that object. In this case, a step is automatically taken to determine whether or not a conflict has occurred among the participants with respect to the object shown on the display 105 (Step S2). While the object is shown on the display 105, the CPU 101 automatically checks at all times whether or not the conflict has occurred among the participants.

Many ways can be considered to detect a conflict. For example, detection can be made by the direction pointed by the fingers of the participants P1 through P4, voices uttered by the participants P 1 through P4, or the line of sight of the participants P 1 through P4.

When detection is made by the direction pointed by the fingers of the participants P 1 through P4 or the line of sight of the participants P1 through P4, the image captured by the camera 106 placed before the participants P1 through P4 is analyzed so that the direction pointed by the finger or the line of sight is identified for each of the participants. The directions and others identified for respective participants are put together and analyzed. If there is agreement in the directions pointed by the fingers of the participants with respect to one and the same object, or there is agreement in the lines of sight among the participants, detection is made to determine that a conflict has occurred.

If a conflict is detected by voices uttered by participants P 1 through P4, the voices uttered by participants are identified for each participant according to the vocal sounds picked up by the microphone 107. A keyword is set for each of the objects appearing on the display 105. The voices uttered by a plurality of participants agree with the keyword of one and the same object, detection is made to determine that a conflict has occurred. In this case, the objects and keywords are stored in the ROM 102 and others in the form of a matrix table.

If a conflict among participants is determined to have occurred in Step S2 (Step S2; Yes), the conflicting object is enlarged for easier viewing among the participants in the discussion (Step S3). This will be described with reference to Fig. 4:
As shown in Fig. 4a, the display 105 shows four objects D3 through D6. Assume, for example, that participants P1 and P3 have a discussion observing the object D5. Under this condition, a conflict is considered to have occurred to the object D5 between the participants P1 and P3, and the object D5 is enlarged, shown in Fig. 4b. Display of the conflicting object D5 in an enlarged form in this manner ensures easier viewing of the contents of the object D5 among the participants P1 and P3.

Incidentally, when the object D5 is enlarged as shown in Fig. 4b, other objects D3, D4 and D6 shown on the display 105 will be hidden by the enlarged object D5, and cannot be viewed by the participants P1 through P4. To solve this problem, means are provided to ensure that the objects D3, D4 and D6 will not be hidden when the object D5 is enlarged. This operation is shown in Step S4 of Fig. 4 and thereafter.

Going back to Fig. 3, the explanation will follow: Upon completion of the operation of enlarging the conflicting object in Step S3, a step is taken to determine whether or not there is any object hidden by the object D5. Then a step is taken to determine whether or not it is necessary to move other objects D3, D4 and D6 close to the enlarged object so that they will not be hidden (Step S4). For example, the decision as to whether or not the hidden object should be moved is already set in the initial setting of the image display device A. Thus, according to this setting, a step is taken to determine whether movement is to be performed or not.

If it has been determined in Step S4 that the objects D3, D4 and D6 should be moved so that they will not be hidden, the objects D3, D4 and D6 are then moved where they will not be hidden by the enlarged object D5 (Step S5). For example, each of the objects is moved in the arrow-marked direction of Fig. 5a. This allows the participants P 1 through P4 to continue discussion observing the objects D3, D4 and D6 because the objects D3, D4 and D6 are not hidden by the object D5 which has been enlarged.

In Step S6, a decision is made to see whether or not the objects D3, D4 and D6 should be reduced to the size wherein they will not be hidden by the enlarged object D5. Similarly to the case of determining whether or not the objects should be moved, the decision as to whether or not the objects D3, D4 and D6 should be reduced is already set in the initial setting of the image display device A. Thus, according to this setting, a step is taken to determine whether or not the size should be reduced.

If it has been determined in Step S6 that the objects D3, D4 and D6 should be reduced to such a size that they will not be hidden, a step is then taken to reduce the objects D3, D4 and D6 to such a size that they will not be hidden (Step S7). For example, the objects D3, D4 and D6 are reduced, as shown in Fig. 5b. This allows the participants P1 through P4 to continue discussion observing the objects D3, D4 and D6 because the objects D3, D4 and D6 are not hidden by the object D5, without having to move the objects D3, D4 and D6 as a result of the object D5 being enlarged.

As having been explained with reference to Figs. 3 through 5, if a plurality of participants have a discussion using one and the same object and a conflict has occurred among the participants, easier viewing of the object among a plurality of participants can be ensured by enlarging at least the conflicting object, with the result that discussion will be held more effectively. The need of special operation by the participants can be eliminated by automatic detection of a conflicting object and enlargement of such an object. This will save much time and effort.

### [Movement of a conflicting object to common display area, and rotation]

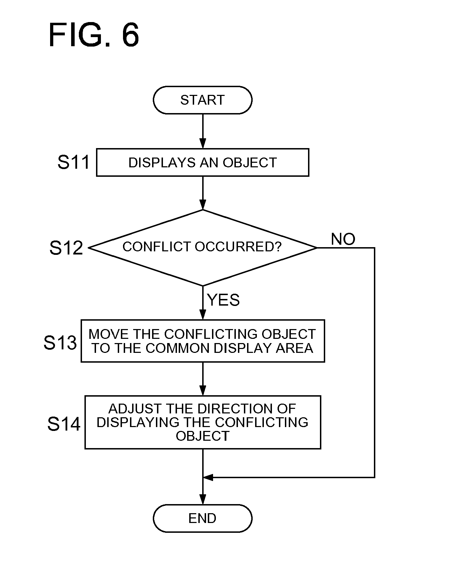

In Figs. 3 through 5, when a conflict has occurred among participants with reference to an object, the conflicting object is enlarged for easier viewing among the participants. It is also possible to arrange such a configuration that the conflicting object is moved to the common display area of the display 105 wherein the object can be easily observed, and the direction of the object to be displayed is adjusted. This procedure will be described below with reference to Figs. 6 through 10.

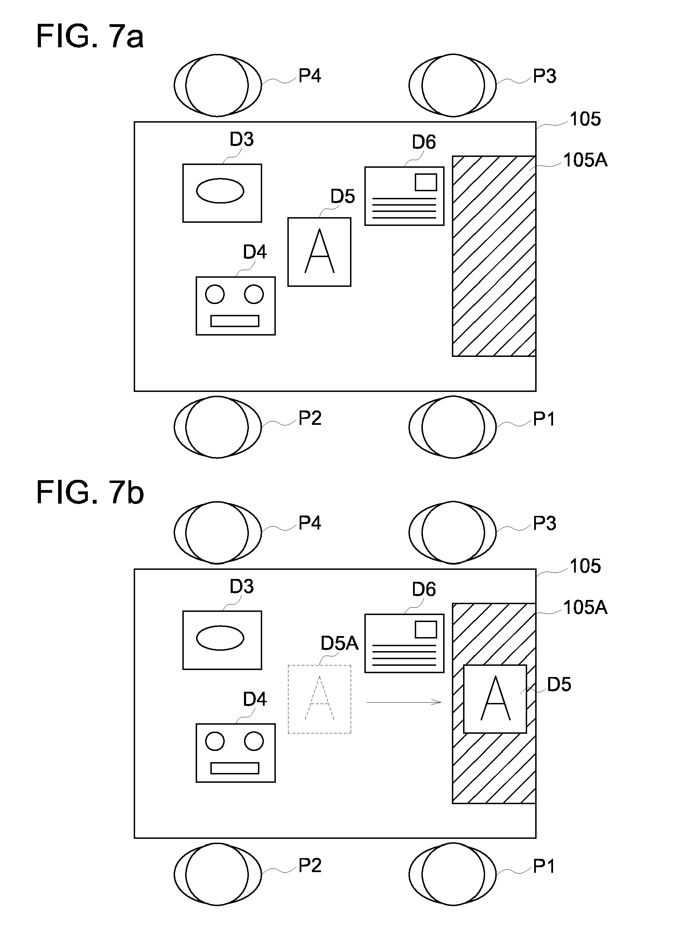

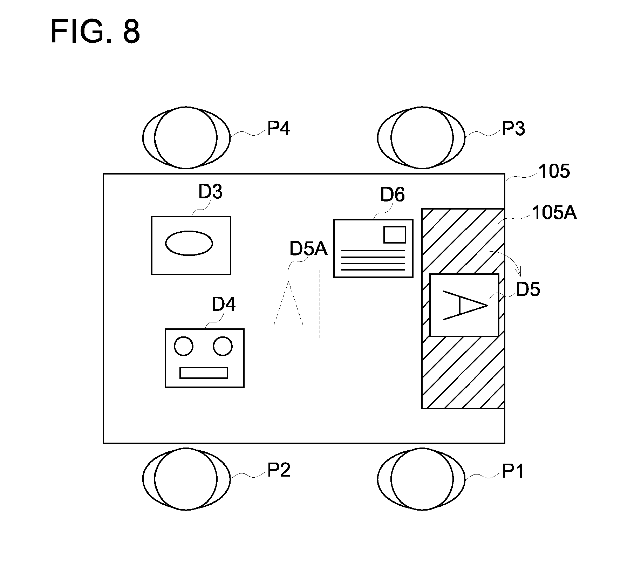

Fig. 6 is a flow chart representing the operation of displaying a conflicting object in the common display area of the display 105. The decision step (Step S12) of Fig. 6 is implemented by collaboration of the CPU 101 of the image display device A with the ROM 102 and RAM 103. Figs. 7a, 7b, and 8 are schematic diagrams showing the image display device A of Fig. 1 as viewed from the top. Four objects D3 through D6 are assumed to be displayed on the display 105 of the image display device A.

The Steps S11 and S 12 of Fig. 6 are the same as the Steps S 1 and S2 of Fig. 3, and the description thereof will be omitted to avoid duplication.

If a conflict among participants is determined to have occurred in Step S12 (Step S12; Yes), the conflicting object is moved to the common display area of the display 105 (Step S13). This will be described with reference to Fig. 7: As shown in Fig. 7a, the display 105 shows four objects D3 through D6. Assume, for example, that participants P1 and 3 have a discussion observing the object D5. Under this condition, a conflict is considered to have occurred to the object D5 between the participants P 1 and P3, and the conflicting object D5 is moved to the common display area 105A located on the right of the display 105, as shown in Fig. 7b.

In this case, an object D5A which is the same as the object D5 is shown at the position previous to the movement of the object D5. This permits the participants to view the object D5 appearing on the common display area 105A, or the object D5A located at the position previous to the movement, whichever is easier to see. Further, this has the advantage of showing the object D5A which is the same as the object previous to the movement, for example, if the object D5 is easier to see when located at the position previous to the movement because of the positional relationship with other objects D3, D4 and D6.

Going back to Fig. 6, the explanation will follow: When the conflicting object D5 has been moved to the common display area 105A in Step S13, the direction of displaying the conflicting object D5 is adjusted by giving consideration to the position of the participants P1 and P3 (Step S14). This will be described with reference to Fig. 8: The object D5 is rotated in the arrow-marked direction of Fig. 8, with consideration given to the position of the participants P 1 and P3, whereby the direction of displaying the object D5 is adjusted.

As having been described with reference to Figs. 6 through 8, when a plurality of participants have a discussion observing one and the same object, and a conflict has occurred among a plurality of participants, the conflicting object can be moved to the common display area 105A of the display 105 wherein the object can be easily observed, and the direction of the object to be displayed is adjusted. This will ensure easier viewing of the object among a plurality of participants, with the result that discussion will be held more effectively.

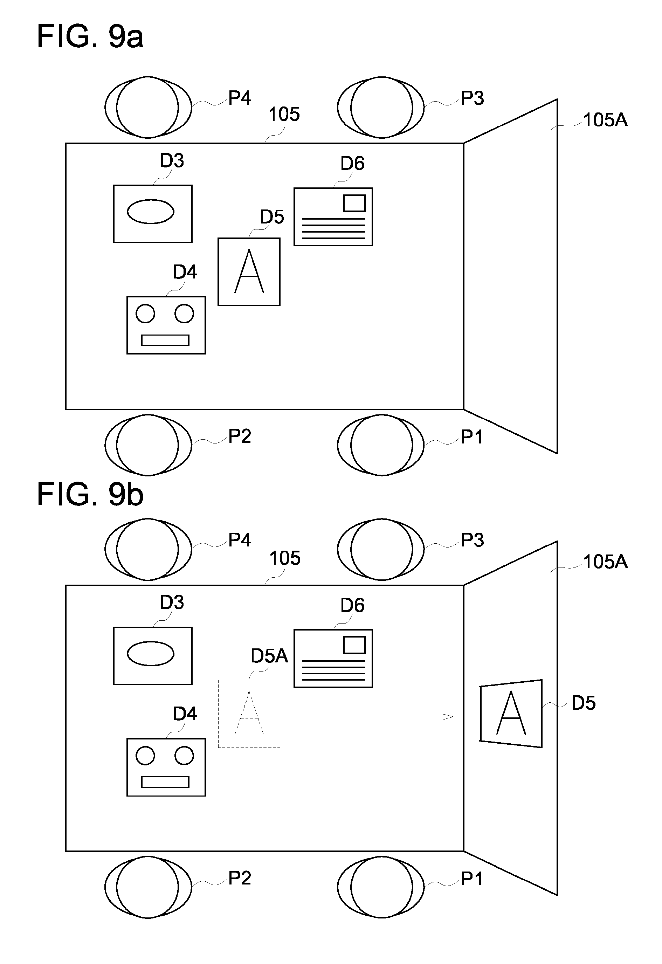

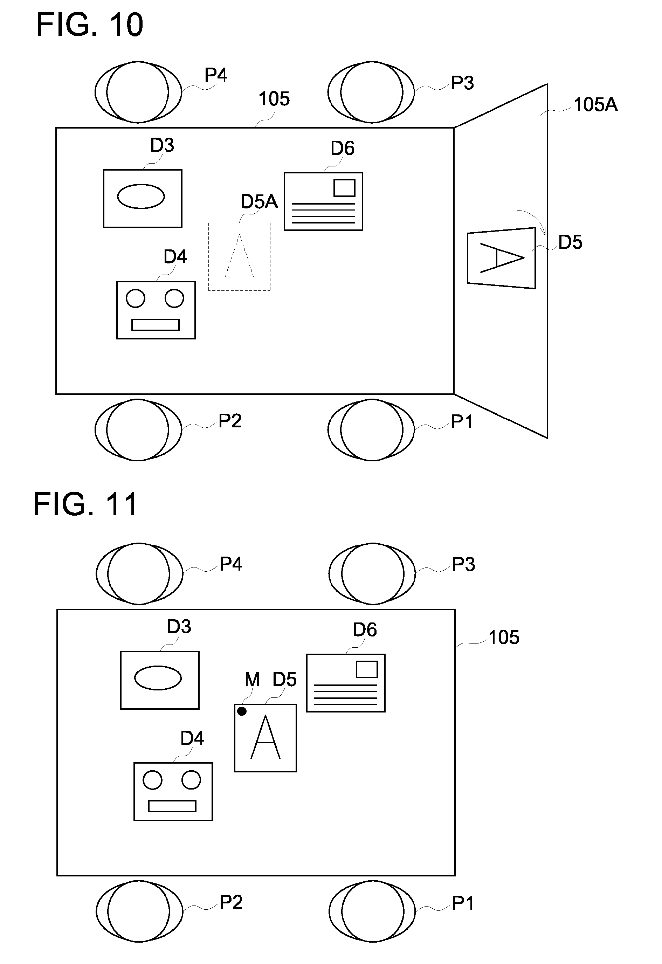

The common display area 105A of Figs. 7 and 8 is located on the same plane as the display 105. The common display area 105A of the display 105 may be located perpendicular to the area of the display 105 which shows the object D3 and others, as shown in Figs. 9 and 10. When a conflict with respect to the object D5 has occurred, the object D5 automatically moves to the perpendicular common display area 105A, as shown in Fig. 9b, the object D5 is rotated to adjust the direction of the display, as shown in Fig. 10. This will ensure easier viewing of the object among a plurality of participants, with the result that discussion will be held more effectively.

If a conflict has occurred among a plurality of participants with respect to an object wherein that the conflicting object is assumed as a crucial object, the conflicting object D can be assigned with a mark M, as shown in Fig. 11. If the conflict has occurred more than once, the number of the marks M can be increased by the number of the conflicts having occurred. This arrangement will clearly shows the cruciality of the object, and will also clearly indicate the object which has conflicted previously, when there is an increase in the number of participants. This ensures that discussion is held more effectively.

It is to be expressly understood, however, that the present invention is not restricted to the aforementioned embodiment. The present invention can be embodied in a great number of variations with appropriate modification or additions, without departing from the technological spirit and scope of the invention claimed.

This embodiment has been described using a table type image display device A, as shown in Fig. 1. An image display device of another configuration can also be used. For example, the display 105 can be designed to show an object in the vertical direction.

In the present embodiment, the detecting section and processing section are constituted by CPU 101 operating in collaboration with the ROM 102 and RAM 103, as shown in Fig. 2. However, the detecting section and processing section can be constituted by using a plurality of CPUs, ROMs and RAMs.

### DESCRIPTION OF REFERENCE NUMERALS

- A: Image display device
- D1: through D6 Objects
- 101: CPU
- 102: ROM
- 103: RAM
- 104: HDD
- 105: Display
- 106: Camera
- 107: Microphone
- 108: Communication section

## Claims

1. An image display device comprising:
a display section for displaying an object;
a detecting section for automatically detecting a conflict among a plurality of users regarding the object displayed on the display section; and
a processing unit for enlarging a conflicting object when the conflict has been detected by the detecting section.

2. The image display device described in claim 1, wherein, when the conflicting object is enlarged, the processing unit moves an other object which is displayed on the display section than the enlarged conflicting object, to a position where the other object is not hidden by the enlarged conflicting object.

3. The image display device described in claim 1 or claim 2, wherein, when the conflicting object is enlarged, the processing unit reduces an other object which is displayed on the display section than the enlarged conflicting object, to a size such that the other object is not hidden by the enlarged conflicting object.

4. The image display device described in any one of claims 1 to 3, wherein the detecting section detects the conflict by a direction pointed by fingers of users.

5. The image display device described in any one of claims 1 to 3, wherein the detecting section detects the conflict by voices uttered by users.

6. The image display device described in any one of claims 1 to 3, wherein the detecting section detects the conflict by a line of sight of users.

7. An image display device comprising:
a display section for displaying an object;
a detecting section for automatically detecting a conflict among a plurality of users regarding the object displayed on the display section; and
a processing unit for moving the conflicting object to a common display area in the display section and for adjusting a direction of displaying the object moved to the common display area, when the conflict is detected by the detecting section.

8. The image display device described in claim 7, wherein, when the conflicting object is moved to the common area by the processing unit, the display section displays an object of the same content as that of the conflicting object at a position from where the conflicting object has been moved.

9. The image display device described in claim 7 or claim 8, wherein the detecting section detects the conflict by a direction pointed by fingers of users.

10. The image display device described in claim 7 or claim 8, wherein the detecting section detects the conflict by voices uttered by users.

11. The image display device described in claim 7 or claim 8, wherein the detecting section detects the conflict by a line of sight of users.
